# EUROPÄISCHE PATENTSCHRIFT

(11) **EP 1 531 135 B1**
(45) Veröffentlichungstag und Bekanntmachung des Hinweises auf die Patenterteilung: **28.02.2007**
(21) Anmeldenummer: 04026396.4
(22) Anmeldetag: 06.11.2004
(51) Int. Cl.: B65G 63/00, B61J 1/10, B61K 7/18

(54) **Schienengeführtes Transportsystem für Container**
Rail transport system for containers
Système de transport à rail pour des conteneurs

(30) Priorität: 15.11.2003 DE 10353455
(43) Veröffentlichungstag der Anmeldung: 18.05.2005
(73) Patentinhaber: Noell Mobile Systems & Cranes GmbH, 97080 Würzburg (DE)
(72) Erfinder: Franke, Klaus-Peter, Dr.-Ing., 97337 Dettelbach (DE); Bauer, Reinhars, 97289 Remlingen (DE); Längerich, Annegret, 97074 Würzburg (DE); Weis, Otto, 97241 Oberpleichheim (DE)
(74) Vertreter: Lüdtke, Frank

(56) Entgegenhaltungen:
- EP-A- 0 083 038
- EP-A- 0 834 459
- DE-A1- 19 633 238
- DE-A1- 19 641 043
- US-A- 1 366 292
- US-A- 4 572 080

## Beschreibung

Die Erfindung betrifft ein schienengeführtes Transportsystem für Container entsprechend den Merkmalen des ersten Patentanspruchs und ein Begrenzungselement. Das schienengeführte Transportsystem ist geeignet für den Transport von Containern und Wechselbehältern auf Umschlagplätzen auf denen die Container oder Wechselbehälter transportiert, sortiert oder gelagert werden müssen und das Transportieren ohne zusätzliche Fahrzeuge erfolgen soll. Derartige Lager- und Sortierplätze sind vorhanden in Häfen, in denen der Umschlag zwischen Schiffen und Straßen oder schienengebundenen Fahrzeugen vorgenommen wird, aber auch in Umschlagterminals, in denen ein Umschlag zwischen schienen- und straßengebundenen Fahrzeugen stattfindet. Derartige Lager- und Umschlagplätze sind in der Regel gebunden an Krane, insbesondere Containerkrane, von denen die Container oder Wechselbehälter direkt auf das schienengeführte Transportsystem abgesetzt werden können und ein Verfahren bzw. Sortieren in Richtung auf das Lager oder die schienen- oder straßengebundenen Transportsysteme erfolgt.
Containertransportsysteme oder Transportsysteme für den Transport von Containern in Wechselbehältern sind nach dem derzeitigen Stand der Technik bekannt. Aus DE 195 03 877 C2 ist eine zweiteilige Palette für Fahrzeuge mit elektromotorischen Linearantrieben bekannt, wobei die Palette zweiteilig ist und in automatischen Parkhäusern verfährt. Zur Führung des Fahrzeuges dienen Führungsprofile und Führungselemente, die an den Führungsprofilen abrollen, wobei schwenkbare Tragrollen auf dem Mittelteil der Führungsprofile verfahren. Das vorgeschlagene System hat dem Nachteil, daß in den Kreuzungspunkten sehr hohe Kräfte aufgebracht werden müssen um die schwenkbaren Tragrollen in eine andere Richtung zu lenken. Für sehr hohe Lasten ist daher dieses System wenig geeignet. Aus DE 196 41 043 A1 ist ein Containertransportsystem mit fahrbaren, Linearmotoren und drehbaren Rädern bestehend aus einem System von quer in einem rechten Winkel und parallel zueinander angeordneten Fahrbahnen bekannt, die Kreuzungspunkte bilden, wobei außerhalb der Kreuzungspunkte mittig Führungsschienen in den Transportbahnen angeordnet sind, auf den Fahrbahntransportwegen mit um eine Drehachse drehbaren Laufrollen verfahren, wobei die Abstände der Laufrollen mit den Abständen der Fahrbahn übereinstimmen und die Laufrollen, die von horizontalen Führungsrollen umgeben sind, in den Kreuzungspunkten drehbar sind, wobei in Längs- und Querrichtung am Transportwagen Magnete angeordnet sind, die mit Statoren der Fahrbahnen den Transportwagen in Längs- und Querrichtung bewegen, wobei am Transportwagen angeordnete Schwenk- Schieber die vorhandenen Laufrollen drehen. Die Vorrichtung ist besonders für den Transport hoher Lasten in Containern geeignet. Bei der Vorrichtung werden jeweils zwei Laufrollenpaare durch einen Schwenkschieber betätigt. Die Fahrbahnen stellen Doppelt-T-Träger dar, wobei mittig Führungsschienen in den Fahrbahnen angeordnet sind, an denen Führungsrollen verfahren und die Räder führen, Statoren beidseitig der Fahrbahnen angeordnet sind und die Laufrollen über eine steife Drehachse mit dem Transportwagen verbunden sind. Dieses System hat den Nachteil, daß durch die steife Verbindung der Rollen einseitig abgesenkte Fahrbahnen zu hohen Kräften in der Achse oder im Drehgelenk der Rollen führen. Weiterhin kommt es, wenn beide Fahrbahnseiten nicht auf gleicher Höhe sind, zu einer einseitigen Abnutzung der Fahrbahnen, was bei hohen Lasten zu einem erheblichen Verschleiß und zu einer Minderung der Betriebssicherheit führt. Um dem entgegen zu wirken, wurden bei diesem System die relativ breiten Doppelt-T-Träger als Fahrbahn gewählt, was aber aufgrund des geringen Durchmessers der Oberseite des Doppelt-T-Trägers dazuführt, daß diese nach einer gewissen Betriebszeit ausgewechselt werden müssen. Aus EP 08 34 459 B1 ist ein Containertransportsystem mit Schienen auf Fahrbahnen, Linearmotoren und drehbaren Rädern mit einem System von quer, im rechten Winkel und parallel zueinander angeordneten Fahrbahnen mit Schienen, die Kreuzungspunkte bilden, bekannt, wobei die Schienen nur außerhalb der Kreuzungspunkte angeordnet sind. Der Transportwagen weist um einen Drehzapfen drehbare Räder mit horizontalen Führungsrollen auf, wobei die Abstände der Räder mit den Abständen der Schienen übereinstimmen und die Räder mit den Führungsrollen in den Kreuzungspunkten drehbar sind. In Längs- und Querrichtung, am Transportwagen angeordnete Magnete bewegen die mit Statoren und den Transportwagen in Längs- und Querrichtung und ein Gestänge mit Gelenkhebel, mit einem Verschiebewagen zum Drehen der Räder mit horizontalen Führungsrollen, welches sich dadurch auszeichnet, daß die Räder am Transportwagen mit Doppelscheibenrädern ausgeführt sind. Auch dieses System weist den Nachteil aus, daß die Räder steif mit dem Transportwagen verbunden sind. Die Räder bestehen im wesentlichen aus drei Teilen, wobei der mittlere Teil der Räder auf der Schiene verfährt und Führungsrollen beidseitig eine Führung an der Schiene gewährleisten. Schienen sind allerdings nur außerhalb der Kreuzungspunkte angeordnet, wobei nur ein begrenzte Radfläche auf der Schiene verfährt. In den Kreuzungspunkten ist allerdings keine durchgehende Schiene vorhanden, da die Doppelräder in der ausgeführten Form auf ebenen Flächen drehen müssen, die durch Platten gebildet werden. Nachteilig an dem Schienensystem ist das keine durchgehende Schiene vorhanden ist, sondern in den Kreuzungspunkten ebene Flächen vorhanden sein müssen, was zu unterschiedlicher Abnutzung zwischen den Schienen und den Drehflächen führt, so daß nach einer gewissen Betriebsdauer eine Aufarbeitung der Laufflächen oder Schienen erfolgen muss, damit keine Stöße zwischen Kreuzungspunkt und Schiene zu einem Verschleiß des Systems führen. Weiterhin sind die Transportwagen nicht punktgenau abbremsbar.

Aus DE 198 08 555 C1 geht ein Prellbock für Schienenfahrzeuge hervor, bei dem das Schienenfahrzeug von einer Frontplatte an einem Druckstab abgebremst wird, wobei der Druckstab die Auffahrkräfte übernimmt. Der Prellbock ist abklappbar, allerdings nur in Richtung auf das Fahrzeug, so daß dieses gegenüber dem Prellbock zurückgesetzt werden muß. Der Prellbock scheint geeignet für Fahrzeuge, die mit hoher Geschwindigkeit abzubremsen sind, weshalb eine Dämpfungsvorrichtung vorhanden ist. Für Fahrzeuge, die mit geringer Geschwindigkeit verfahren und anzuhalten sind, worauf sie ihre Fahrt fortsetzen, ist diese Vorrichtung ungeeignet.

Es ist daher Aufgabe der Erfindung, ein Transportsystem zu entwickeln, bei dem zwischen Kreuzungspunkten und dem ebenen Verfahrflächen die Räder gleichmäßig verfahren, und keine zusätzlichen Kräfte zwischen den Rädern und dem Transportwagen dann auftreten, wenn beide Fahrbahnen geringe Differenzen in ihrer Höhe aufweisen und der Transportwagen bei geringem Fahrtempo und hoher Masse punktgenau abbremsbar ist, wonach die Möglichkeit besteht, den Fahrweg auf der Schiene fortzusetzen.

Diese Aufgabe wird durch ein schienengeführtes Transportsystem nach den Merkmalen des ersten Patenanspruches gelöst.
Unteransprüche geben vorteilhafte Ausgestaltungen der Erfindung wieder.
Die erfindungsgemäße Lösung sieht ein schienengeführtes Transportsystem für Container und Wechselbehälter mit Linearmotoren und schwenkbaren Rädern vor, welches sich dadurch auszeichnet, daß die Räder auf einem System von quer im Winkel und parallel zueinander angeordneten Schienen verfährt, die durchgängige ebene Fahrflächen aufweisen und Kreuzungspunkte bilden, wobei außerhalb der Kreuzungspunkte auf einer Schiene parallel zur anderen Schiene angeordnet mittig ein Führungsprofil verläuft. Weiterhin ist der Transportwagen mit um einen Drehzapfen und schwenkbaren Rädern mit horizontalen Führungsrollen ausgestattet, wobei der Abstand der Räder mit dem Abstand der Schienen für die Längs- und Querfahrt übereinstimmt und die Räder mit den Führungsrollen im Kreuzungspunkt schwenkbar sind. In Längs- und Querrichtung am Transportwagen sind Magnete angeordnet, die mit Statoren der Fahrbahnen den Transportwagen in Längs- und Querrichtung bewegen. Ein umlaufendes mehrteiliges Gestänge mit zwei gegenläufigen Schiebewagen, dient zum gleichzeitigen drehen aller Räder und horizontalen Führungsrollen in den Kreuzungspunkten. Da die Kreuzungspunkte aufgrund der geringen Schienenbreite sehr klein sind, muss der Transportwagen exakt in den Kreuzungspunkten fixiert sein und darf sich in diesen nicht bewegen. Das wird erfindungsgemäß durch Bolzen am Transportwagen gewährleistet, die beim Schwenken der Räder in ein Fixierteil der Fahrbahn eingreifen. Während des Schwenkvorganges der Räder in dem Kreuzungspunkt wird über zweifach am Transportwagen angebauten Gehäusen mit federbelasteten Bolzen und an jeden Schiebewagen angebrachten zweistufigen Schaltlineal der Transportwagen in Fixierpunkten arretiert. Nach dem Ende des Schwenkvorganges der Räder wird der Bolzen z. B. für die Querfahrt wieder entriegelt.

Weiterhin sind die Räder und die Führungsrollen in einem zweiteiligen Radkasten gelagert sind, wobei im äußeren Radkasten das Drehlager und die Führungsrolle, und im inneren Radkasten die Doppelräder gelagert sind. Die Verbindung zwischen dem inneren und dem äußeren Radkasten wird über eine in Fahrtrichtung angeordnete tiefliegende Büchsen/Bolzenlagerung vorgenommen. Dadurch wird sichergestellt, daß eine gleichmäßige Belastung auf die Doppelräder auch bei Schrägstellung der Fahrbahnoberfläche gewährleistet ist.
Weiterhin ist ein Begrenzungselement zum Sichern und Stoppen von Transportwagen und/oder Fahrzeugen vorhanden, dessen Anschlaghebel gegen das zu sichernde und zu stoppende Fahrzeug wirkt und in Fahrtrichtung abklappt.
Vorteilhaft ist es, daß die Räder am Transportwagen als Doppelräder ausgebildet sind.

Vorteilhaft ist es weiterhin, parallel zur Fahrbahn 2 Statoren für die Gestängebewegung mit dem Schiebenwagen anzuordnen.
Weiterhin ist es vorteilhaft nur um drei von vier Doppelrädern horizontale Führungsrollen anzuordnen.
Der Transportwagen besteht Vorteilhafterweise aus einem Ober- und einem Unterwagen, wobei Dämpfungselemente zur Reduzierung des Aufsetzstoßes bestehen und Sicherheitsbügel gegen ein unbeabsichtigtes Auseinanderfahren zwischen Ober- und Unterwagen angeordnet sind. Der zweiteilige Transportwagen hat weiterhin den Vorteil, daß Verformungen im Oberwagen aus unterschiedlichen Transportlasten nur zum geringen Teil auf den Unterwagen übertragen werden und damit ein gleichbleibender Luftspalt zwischen dem Stator und den Wagenmagneten entsteht, der der Antriebsleistung zugute kommt. Vorteilhaft ist es weiterhin, daß zum Transport des Transportwagens auf dem Oberwagen Containereckbeschläge im Abstand eines Containers eingebaut sind. Dadurch ist es möglich, mit einem Hubgerät, z. B. einem Containerspreader, den Transportwagen anzuheben.

Die Transportwagen sind so gestaltet, daß sie ohne eigene Energie bzw. Energiezuführung und ohne eigene Intelligenz verfahren. Vorteilhaft ist es die Schienen auf Schwellen auch im Kreuzungsbereich zu verlegen. Dadurch ist auch bei weniger festem Untergrund, wie dieser häufig auf Lagerplätzen vorhanden ist, gewährleistet, daß beide Seiten der Fahrbahn sich exakt auf gleicher Höhe befinden. Die Parkpositionen des Transportwagens sind vorteilhafter Weise mit Kipp- und überfahrbaren Begrenzungselementen auszustatten. Diese sind derartig zu gestalten, daß durch den kippbaren Stützhebel die auftretenden Rahmenkräfte direkt abgeleitet werden. Das überfahrbare Begrenzungselement zum Sichern und Stoppen von Transportwagen besteht aus einem doppelt abgewinkelten oder Z-förmigen Hebelanschlag, der mit einem Gelenkbolzen schwenkbar an einem Lagerbock angeordnet ist. Dabei wirkt eine Fläche des Anschlaghebels gegen das zu sichernde oder zu stoppende Fahrzeug, wobei die Unterseite des Anschlaghebels gegen einen umklappbaren Stützhebel wirkt. Der um eine Achse schwenkbare Stützhebel ist mit dem Anschlaghebel durch eine Verbindungslasche verbunden, dem am Stützhebel unterhalb des Schwenkpunktes angeordnet ist und am Anschlaghebel ebenfalls unterhalb des im Knie Z-förmig ausgeführten Hebels wirkt. Eine Seite des Anschlaghebels, in der ein Gelenkbolzen, der Bolzen für die Verbindungslasche und ein weiterer Bolzen angeordnet sind, wird als Schwenkhebel bezeichnet. Unterhalb des Bolzens für die Verbindungslasche ist ein Bolzen für ein Betätigungselement angeordnet, welches durch eine Verlängerungsstange mit dem Schwenkhebel verbunden ist. Das Betätigungselement ist einerseits mit einem Lagerbock schwenkbar verbunden und andererseits schwenkbar am Schwenkhebel angeordnet.
Sowohl im Gelenkbolzen des Anschlaghebels als auch am Gelenkbolzen des Stützhebels sind Federn angeordnet, die bei geöffneter Stellung für das Rückholen der Elemente sorgen. Im geschlossenen Zustand wirkt das Begrenzungselement gegen den zu bremsenden Wagen einerseits und andererseits gegen einen Anschlag, der auf einer Grundplatte zusammen mit einem weiteren Anschlag und zwei Lagerböcken befestigt ist. Im geöffneten Zustand wirkt der Anschlaghebel gegen einen Lagerbock. Zum Öffnen des Schwenkhebels wird zunächst der Stützhebel unter dem Schwenkhebel zurückgeklappt, wonach das Zurückklappen des Anschlaghebels so lange erfolgt, bis die Bewegung durch den Anschlag begrenzt wird. Danach kann das Transportfahrzeug das Begrenzungselement überfahren. Sobald das Begrenzungselement überfahren ist, kann durch das Betätigungselement oder den Elektromagneten der Anschlaghebel zurückgezogen werden, bis der Stützhebel den Anschlaghebel erneut fixiert.

Eine weitere Parkposition - Halteeinrichtung besteht darin, unter dem Längsmagneten des Transportwagens ein ferritischer Reaktionsteil angebaut ist, der über die anstehende Magnethälfte den Wagen hält.

Weiterhin ist es vorteilhaft, daß um ein paar Doppelräder jeweils vier horizontale Führungsrollen am Radkasten angeordnet sind. Sensoren zur Steuerung der Statoren und zur Wegmessung sind flächendeckend zwischen den Fahrbahnen anzuordnen. Weiterhin ist es sinnvoll, die Sensoren so anzuordnen, daß sich immer ein Sensor unter dem Transportwagen befindet. Die Fahrbahnen sind als modulare Baukastensysteme ausgeführt und damit erweiter- und ergänzbar. Vorteilhaft ist es, die Breite des Transportwagens so zu bemessen, daß die Container direkt von Straddle Carrier Fahrzeugen übernommen werden können. Das erfindungsgemäße schienengeführte Transportsystem für Container und Wechselbehälter hat den Vorteil, daß durchgehende Schienen auch in Kreuzungspunkten angeordnet sind, auf denen die Räder des Transportwagens schwenkbar sind, wobei durch zweiteilige Radkästen sichergestellt ist, daß eine gleichmäßige Belastung auf die Doppelräder auch bei Schrägstellung der Fahrbahnoberfläche erfolgt.

Im folgenden wird die Erfindung an einem Ausführungsbeispiel und vierzehn Figuren näher erläutert. Die Figuren zeigen:
*Figur 1:* Schienengeführtes Transportsystem im Schnitt in Höhe der Hauptstatoren
*Figur 2:* Schienengeführtes Transportsystem in Schnitt in Höhe der geschwenkten Radkästen
*Figur 3:* Schienengeführtes Transportsystem im Schnitt im Bereich der Verschiebewagen
*Figur 4:* Schienengeführtes Transportsystem in Seitenansicht im Schnitt mit Eckbeschlägen
*Figur 5:* Schienengeführtes Transportsystem mit Darstellung von Bolzen und Fixierelement
*Figur 6:* Detailansicht von Bolzen und Fixierelement
*Figur 7:* Darstellung des Schwenkgestänges und der Räder in Stellung Längsfahrt
*Figur 8:* Darstellung des Schwenkgestänges und der Räder in 45° Stellung
*Figur 9:* Darstellung des Schwenkgestänges und der Räder in Stellung Querfahrt
*Figur 10:* Darstellung des Schienensystems mit Statoren und Begrenzungselementen
*Figur 11:* Überfahrbares Begrenzungselement in geschlossenem Zustand in Seitenansicht.
*Figur 12:* Querschnitt des Unterwagens über dem ferristischen Unterbau.
*Figur 13:* Überfahrbares Begrenzungselement in gleicher Ansicht beim Öffnen.
*Figur 14:* Überfahrbares Begrenzungselement in geöffnetem Zustand.

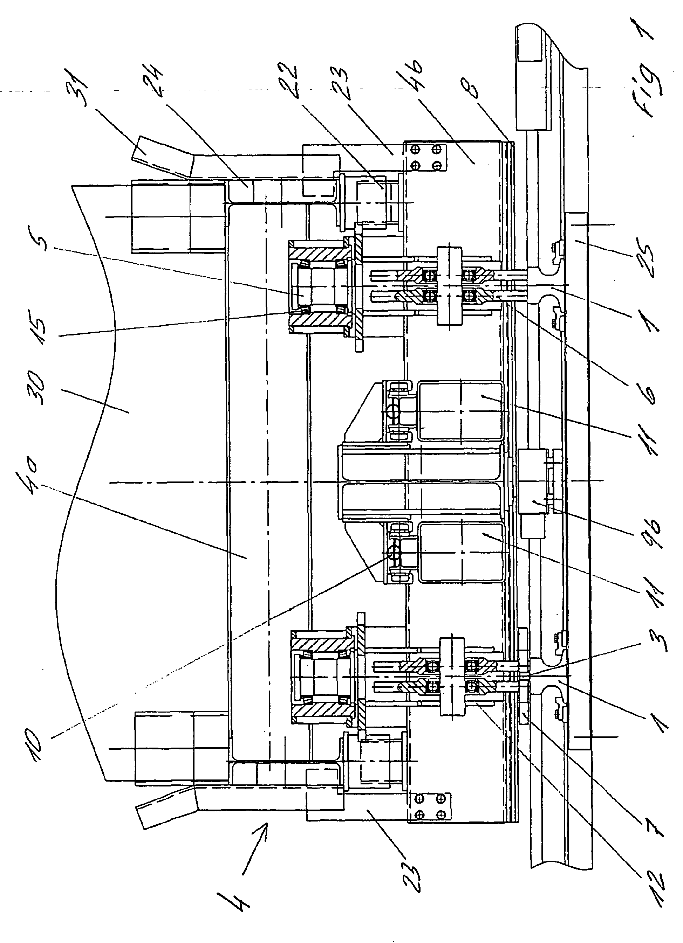

Die *Figur 1* zeigt einen Transportwagen 4 bestehend aus Oberwagen 4a und Unterwagen 4b, die durch Dämpfungselemente 22 miteinander verbunden sind. Ein auseinanderfahren von Oberwagen 4a und Unterwagen 4b wird durch den Sicherheitsbügel 23 verhindert. Am Oberwagen angeordnet sind Eckbeschläge 24, die zum Anheben des Transportwagens dienen. Der Transportwagen 4 verfährt auf Schienen 1, die auf Schwellen 25 verlegt werden. Zwischen den Schienen sind Hauptstatoren 9b angeordnet, gegenüber den Statoren 9b befinden sich am Unterwagen 4b Schiebenwagen 11, die von Laufrollen 11a geführt die Schwenkgestänge 10 bewegen. An der Unterseite des Unterwagens 4b sind Magnete 8 angeordnet. Der Transportwagen 4 verfährt mit schwenkbaren Rädern 6 auf den Schienen 1, wobei eine Führung der Räder 6 durch Führungsrollen 7 an einem Führungsprofil 3 erfolgt. Das Führungsprofil 3 ist nur auf einer der beiden Schienen 1 angeordnet, da das ausreicht, um den Transportwagen 4 zu führen. Die Räder 6 sind in einem Radkasten 12 angeordnet. Ein Drehen des Radkastens 12 erfolgt an dem Drehzapfen 5, der mit einem Drehlager 15 mit dem Transportwagen 4 verbunden ist.
Die *Figur 2* zeigt die Radkästen 12 in geschwenkter Stellung, wobei der äußere Radkasten 13 mit dem inneren Radkasten 14 über eine Buchse/Bolzenlagerung 16 miteinander verbunden ist. Diese Buchse/Bolzenlagerung 16 ist tiefer angeordnet als die Drehachse der Räder 6. Dadurch ist nur eine geringere Auslenkung bei einer schrägen Fahrbahn notwendig. Zwischen den beiden Rädern 6 ist der Hauptstator 9b für die Querfahrt zu sehen. Die *Figur 3* zeigt einen Querschnitt durch den Transportwagen 4 bestehend aus Oberwagen 4a und Unterwagen 4b im Bereich der Schiebewagen 11 unter denen Magnete 8 gegenüber den Statoren 9a angeordnet sind.
Die *Figur 4* zeigt am Oberwagen 4a angeordnete Einführungsschrägen 31 für die Container und Eckbeschläge 24 zum Transportieren des Transportwagens 4. Das Gestänge 10 zum Bewegen des Radkastens 12 bestehend aus dem äußeren Radkasten 13, an dem die Führungsrollen 7 angeordnet sind, die das Rad entlang dem Führungsprofil 3 führen, und dem inneren Radkastenteil 14.
Die *Figur 5* zeigt den Transportwagen 4, der mit seinen Rädern 6 auf einem Kreuzungspunkt 2 steht, so daß der Bolzen 18 mit seinem Gehäuse 17 am Transportwagen 4 in das Fixierteil 21 eingreift. Unterhalb des Transportwagens 4 ist ein Sensor 27 im Bereich des Schiebewagens 11 angeordnet, wobei der Schiebewagen 11 sich über den Magnet 8 befindet.
Die *Figur 6* zeigt eine Detailvergrößerung der Figur 5, wobei in dieser ersichtlich ist, daß das Gestänge 10 am Schiebewagen 11 im Bereich der Lagerrollen 11a gelagert wird und ein zweistufiges Schaltlineal 19 über eine Laufrolle 29 bewirkt, daß der Bolzen 18 in den Fixierpunkt 20 des Fixierteiles 21 einrastet. Bei dem Fixierpunkt 20, kann es sich um ein Loch handeln, dessen Größe so beschaffen ist, daß der Bolzen 18 gut einrasten kann. Der Bolzen 18 ist mit einer Rückholfeder in seinem Gehäuse 17 beweglich angebracht, so daß in eine der beiden Endlagen des Schaltlineals 19 der Bolzen 18 automatisch nach oben bewegt wird. Magnet 8 und Stator 9 liegen sich im rechten Bildteil gegenüber.

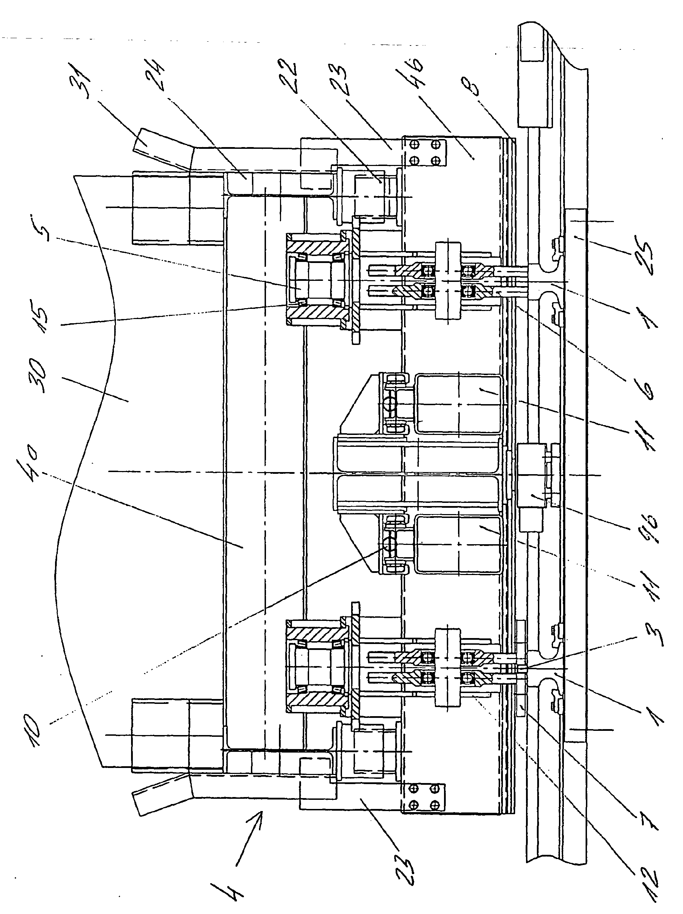

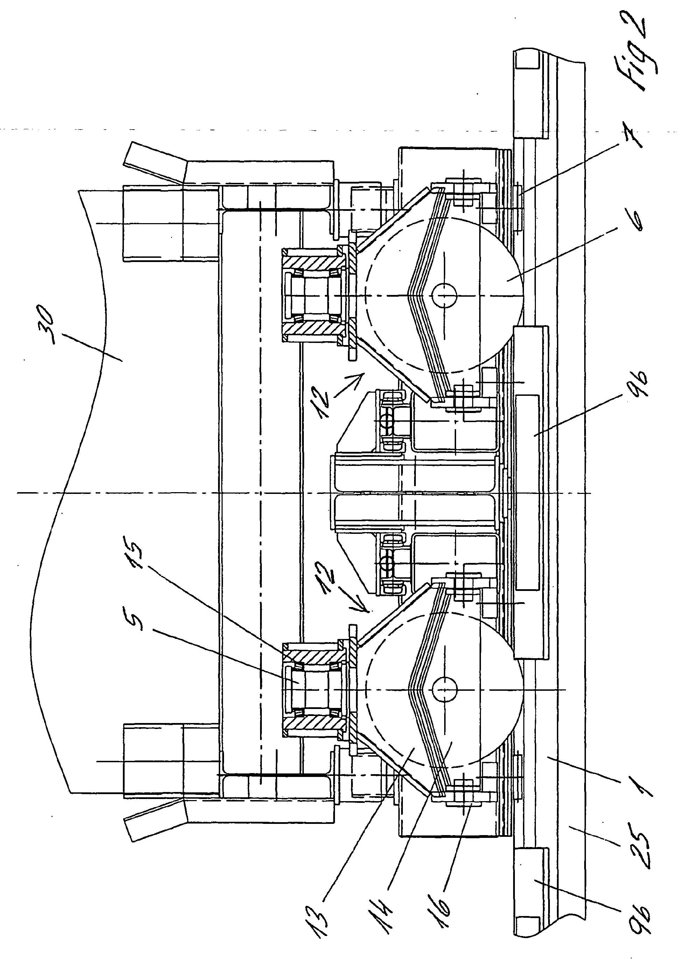

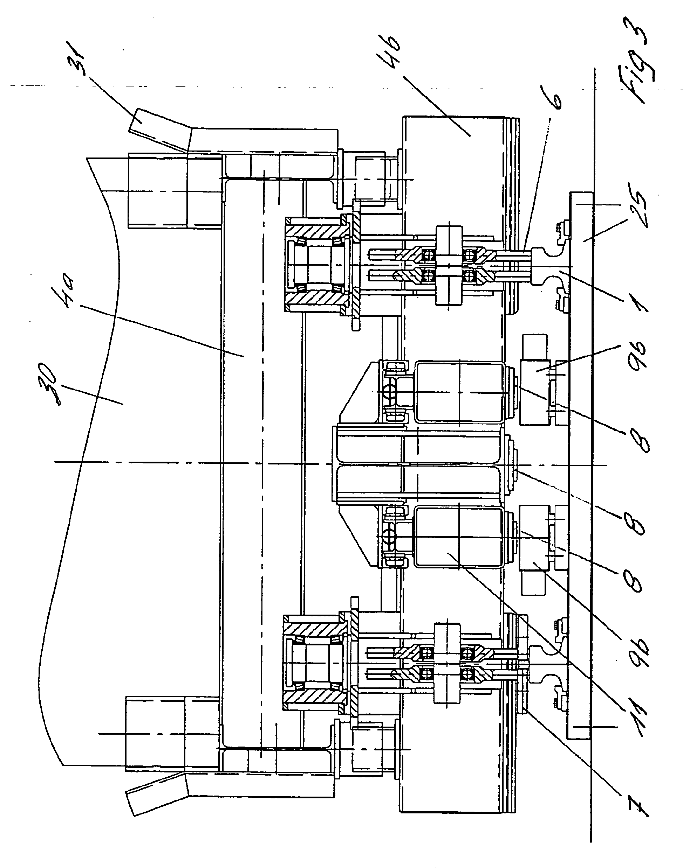

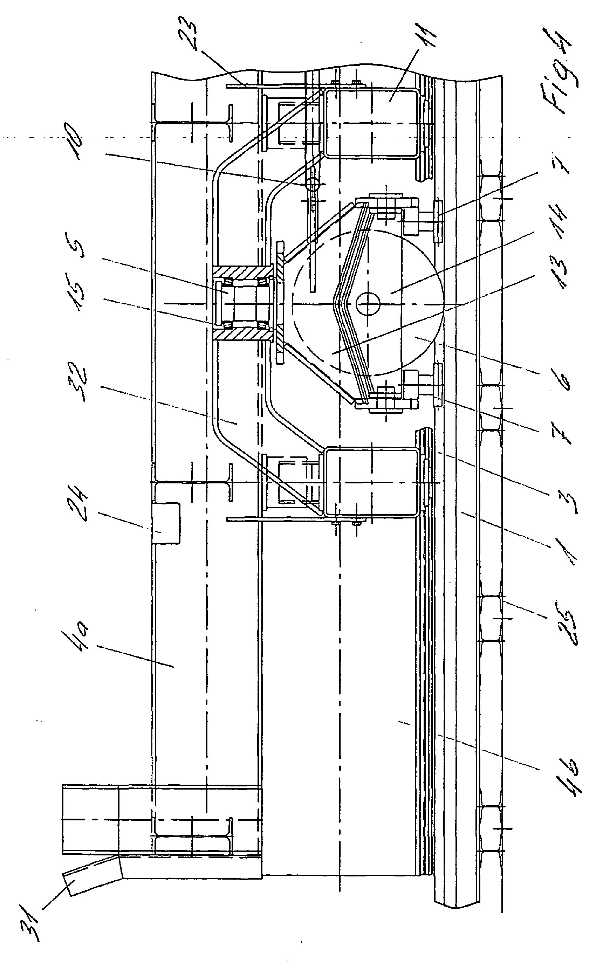

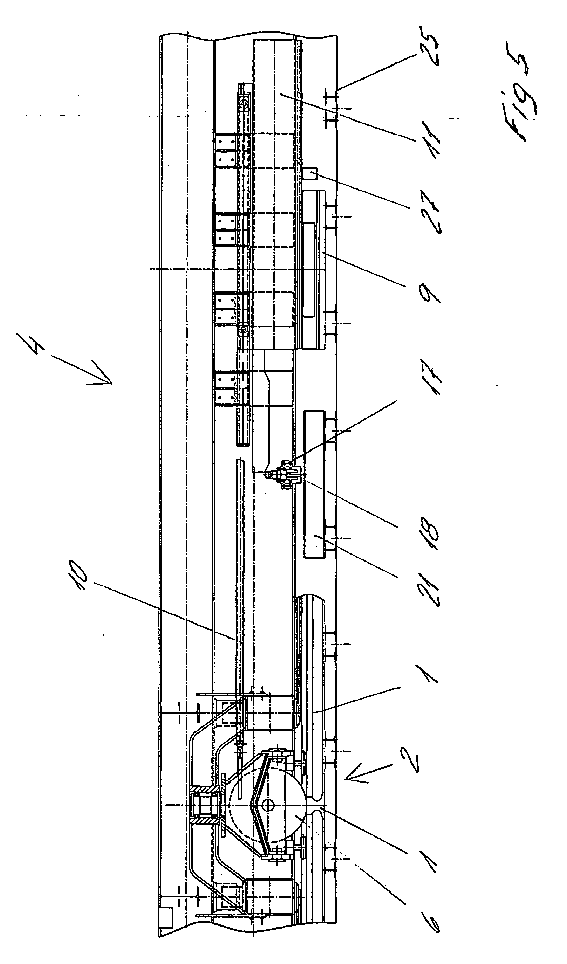

Die *Figuren 7 bis 9* zeigen den Schiebewagen 11, mit dem Gestänge 10 und dem Radkasten 12 für die Räder 6 in verschiedenen Stellungen, mit dem Unterwagen 4b, nämlich Figur 7 Längsfahrt, Figur 8, geschwenkt in 45° Stellung und Figur 9 Querfahrt. Allen drei Figuren ersichtlich ist, daß durch das Gestänge 10 alle Räder 6 miteinander verbunden sind und dadurch ein gleichzeitiger Schwenkvorgang stattfinden kann.

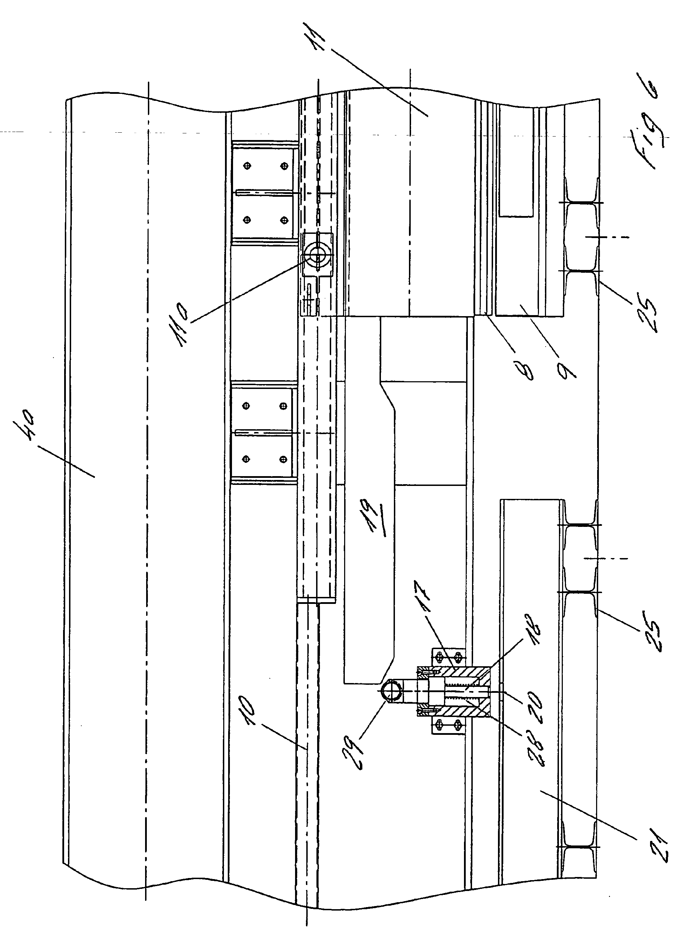

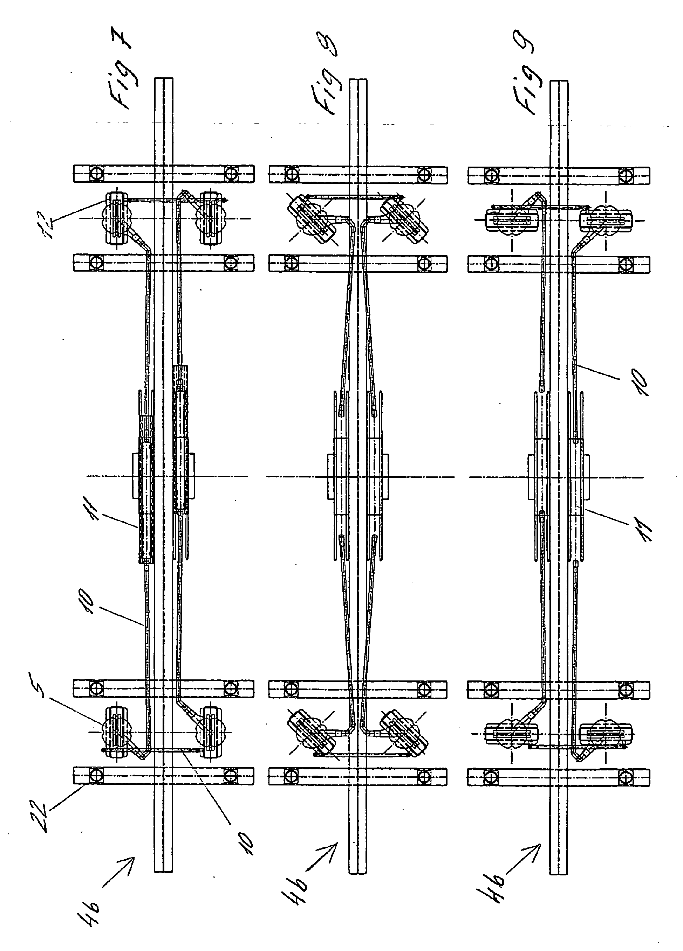

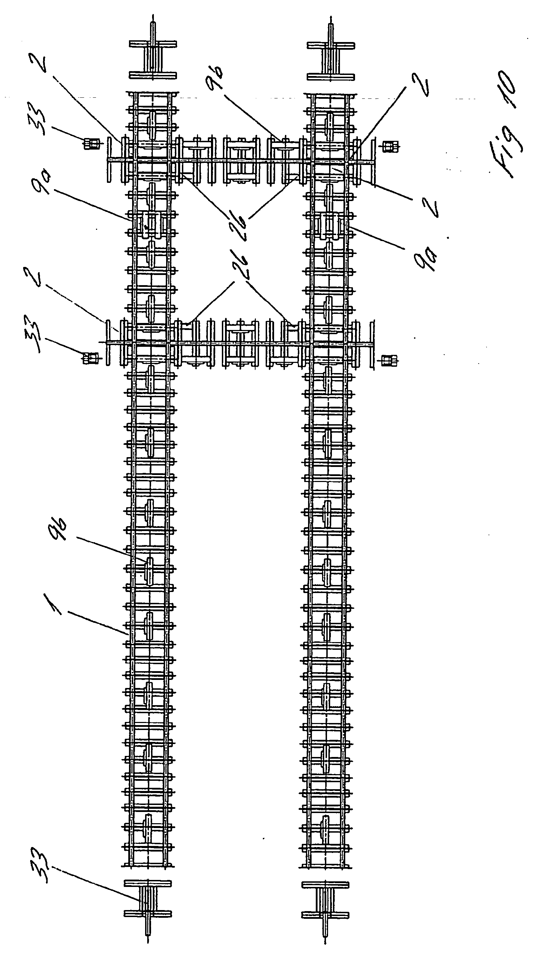

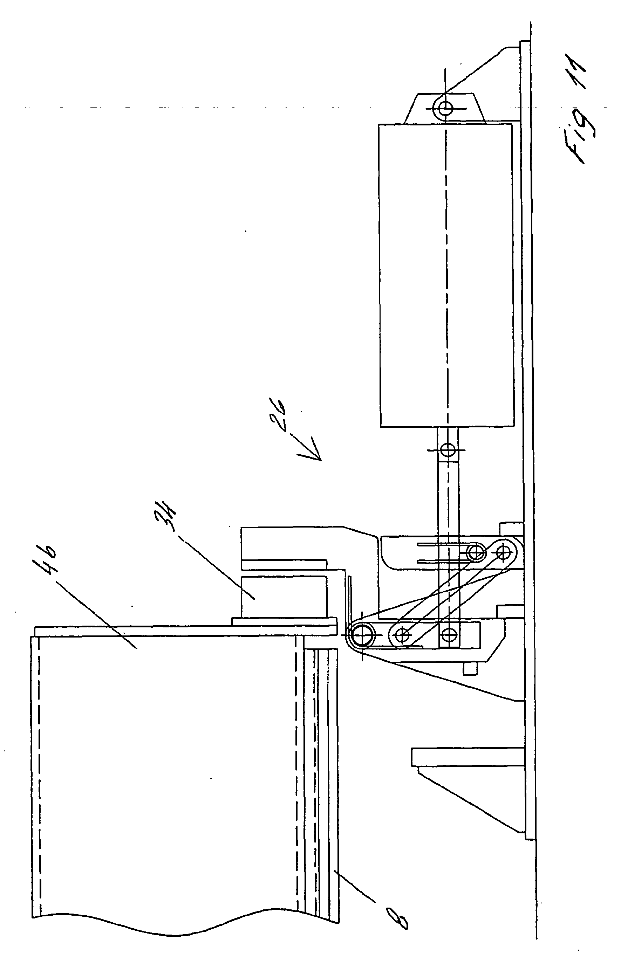

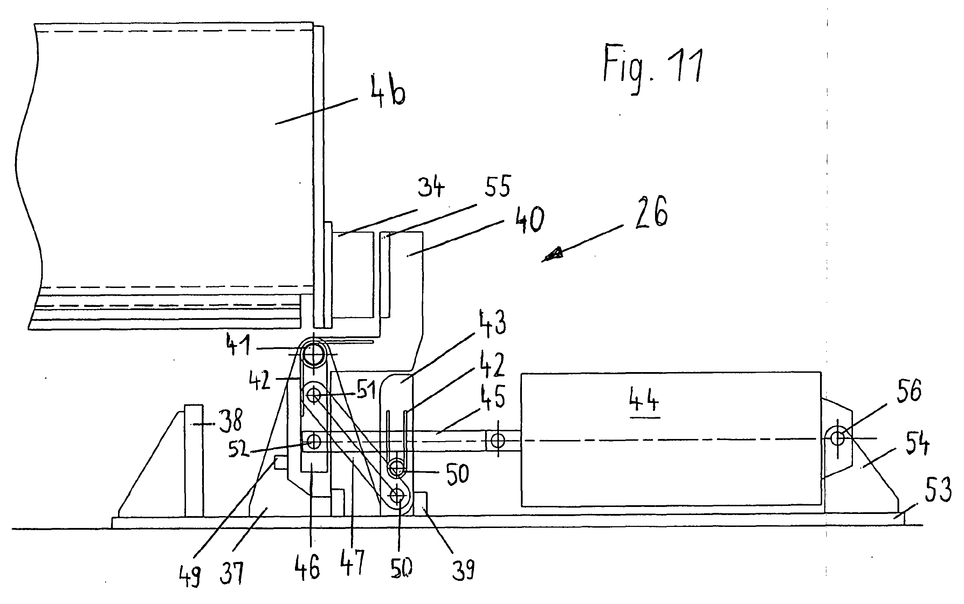

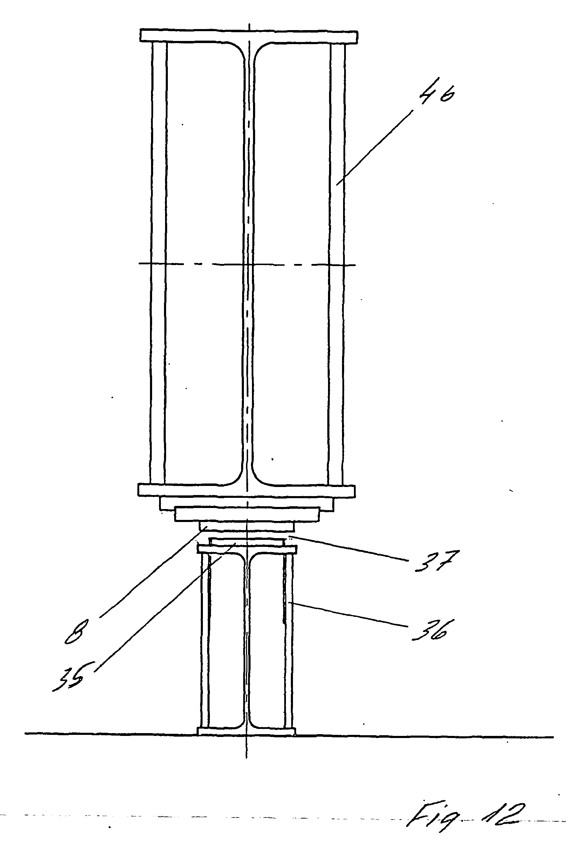

Die *Figur 10* zeigt parallel angeordnete Schienen 1 auf Schwellen 25 zwischen denen Hauptstatoren 9b angeordnet sind, wobei neben den Kreuzungspunkten 2 zwei Begrenzungselemente 26 und Puffer 33 angeordnet sind, mit denen die Transportwagen 4 am Ende der Schienen 1 und am Rand der Kreuzungspunkte 2 fixiert werden. Ein überfahrbares Begrenzungselement 26, welches gegen den Wagenpuffer 34 des Unterwagens 4b wirkt ist der *Figur 11* zu entnehmen. Das Sichern des Wagens 4b gegen seitliches Verschieben durch Windkräfte oder ähnliches kann, wie in *Figur 12* gezeigt, auch durch die Kraftlinien des Magnetfeldes zwischen dem ferritischen Unterbau 36 und dem Unterwagen 4 b erreicht werden.

Die *Figur 11* zeigt ein Fahrzeug 4 b mit einem Wagenpuffer 34, der gegen die Fläche 55 eines Anschlaghebels 40 gestoßen ist und in die Richtung auf den Anschlag 40 nicht weiterfahren kann, wobei der Anschlaghebel 40 gegen einen Stützhebel 43 wirkt, der um Achse 50 drehbar ist, wohingegen der Anschlaghebel 40 um den Gelenkbolzen 41 schwenkbar ist. Der Gelenkbolzen 41 ist am Lagebock 37 befestigt, der mit der Grundplatte 53 verbunden ist. Ebenfalls mit der Grundplatte 53 verbunden sind der Anschlag 38, die Begrenzungsteile 39 sowie der Lagerbock 54, an dessen Achse 56 das Betätigungselement 44, im vorliegenden Fall ein Elektromagnet, befestigt ist. Vom Elektromagneten führt eine Verlängerungsstange 45 zum Bolzen 52 am Schwenkhebel 46. Durch diesen ist der Schwenkhebel 46 schwenkbar, so daß der Anschlaghebel 40 weggekippt werden kann. Die Feder 42 am Gelenkbolzen 51 bewirkt, daß der Anschlaghebel 40 im entlasteten Zustand immer oben ist.

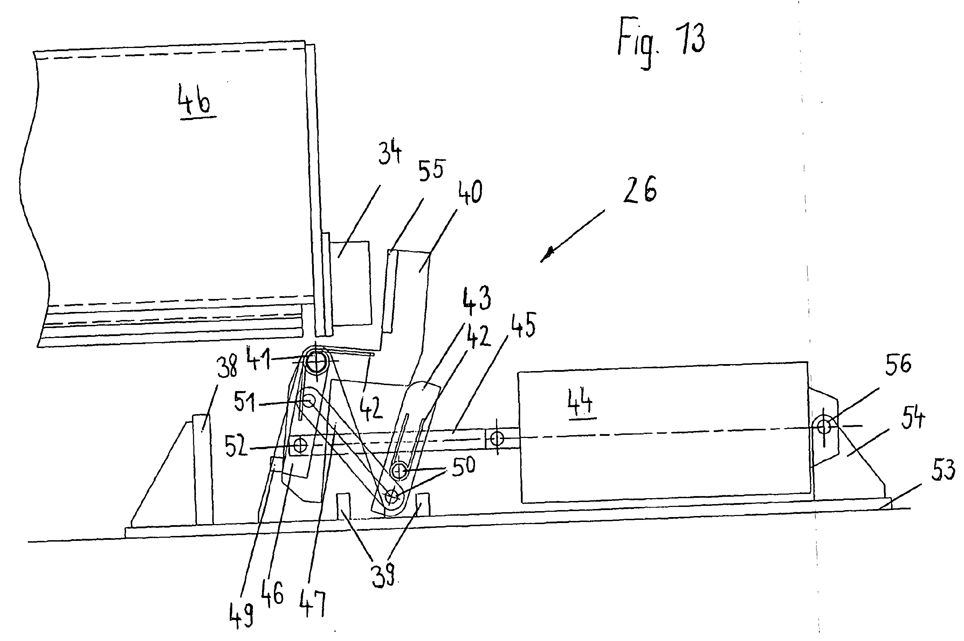

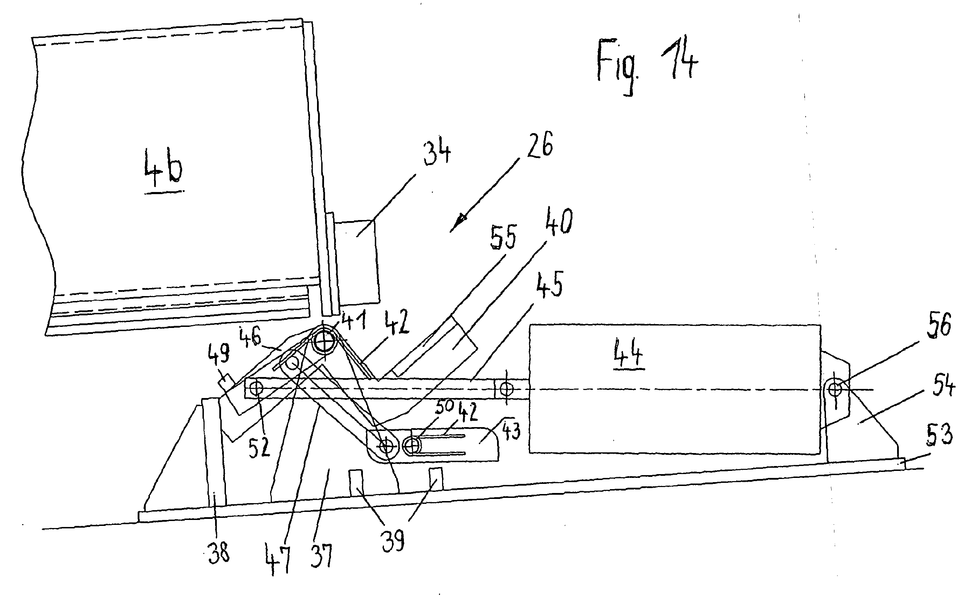

Die *Figur 13* zeigt den Kippvorgang des Anschlaghebels 40, bei dem durch den Elektromagneten 44 die Verlängerungsstange 45 in Richtung auf den Schwenkhebel 46 ausgefahren wird, bis der Schwenkhebel 46 am Begrenzungsteil 49 anschlägt, was zur Folge hat, daß der Schwenkhebel 46, der am Gelenkbolzen 41 befestigt ist, die Verbindungslasche 47 betätigt, wodurch der Stützhebel 43 unter dem Anschlaghebel 40 weggezogen wird, wonach der Anschlaghebel 40 um den Gelenkbolzen 41 so lange geschwenkt wird, bis er gegen den Anschlag 38 fährt. Dabei wird der Elektromagnet 44 um die Achse 56 geschwenkt. Der Stützhebel 43 wird in seiner Bewegung vom Begrenzungsteil 39 begrenzt. Sowohl am Stützhebel 43 als auch am Anschlaghebel 40 sind Federn 42 angeordnet. Wenn der Anschlaghebel 40 seine Endposition erreicht hat, die *Figur 14* entnommen werden kann, gibt er den Weg des Fahrzeuges 4 b frei und kann von diesem überfahren werden. Nach dem Überfahren kann der Fahrweg erneut dadurch gesperrt werden, daß der Elektromagnet 44 durch ein Einziehen der Verlängerungsstange 45 den Bewegungsablauf rückgängig macht, so daß der Anschlaghebel 40 die Fahrbahn wieder versperrt.

Die *Figur 14* zeigt das überfahrbare Begrenzungselement 26 in geöffnetem Zustand.

### Liste der verwendeten Bezugszeichen

- 1: Schiene
- 2: Kreuzungspunkt
- 3: Führungsprofil
- 4: Transportwagen
- 4a: Oberwagen
- 4b: Unterwagen
- 5: Drehzapfen
- 6: Räder
- 7: Führungsrolle
- 8: Magnete
- 9: Statoren
- 9a: Stator für Verschiebewagen
- 9b: Hauptstator
- 10: Gestänge
- 11: Schiebewagen
- 11a: Laufrolle von 11
- 12: Radkasten
- 13: äußerer Radkasten
- 14: innerer Radkasten
- 15: Drehlager
- 16: Buchse/Bolzenlagerung
- 17: Gehäuse des Bolzens am Transportwagen 4
- 18: Bolzen
- 19: Schaltlineal
- 20: Fixierpunkt
- 21: Fixierteil
- 22: Dämpfungselement, Feder
- 23: Sicherheitsbügel
- 24: Eckbeschlag
- 25: Schwelle
- 26: Begrenzungselement
- 27: Sensor
- 28: Feder
- 29: Laufrolle
- 30: Container
- 31: Einführungsschräge
- 32: Traverse
- 33: Puffer
- 34: Wagenpuffer
- 35: Eisenrückschlußblech
- 36: ferritischer Unterbau
- 37: Lagerbock
- 38: Anschlag
- 39: Begrenzungsteil
- 40: Anschlaghebel
- 41: Gelenkbolzen
- 42: Feder/Spiralfeder
- 43: Stützhebel
- 44: Betätigungselement/Elektromagnet
- 45: Verlängerungsstange
- 46: Schwenkhebel
- 47: Verbindungslasche
- 48: Schwenkpunkt
- 49: Begrenzungsteil
- 50: Bolzenbohrung für Bolzen zwischen 47 und 43
- 51: Bolzenbohrung für Bolzen zwischen 47 und 46
- 52: Bolzenbohrung für Bolzen zwischen 45 und 46
- 53: Grundplatte
- 54: Lagerbock für 44
- 55: Fläche
- 56: Achse
- 57: Luftspalt

## Patentansprüche

1. Schienengeführtes Transportsystem für Container und Wechselbehälter, welches Linearmotor betrieben ist, bestehend aus
- einem System von vier im Winkel und parallel zueinander angeordneten Schienen (1) mit einer durchgängigen ebenen Fahrfläche, die Kreuzungspunkte (2) bilden, wobei außerhalb der Kreuzungspunkte (2) auf einer Schiene (1), der parallel zueinander angeordneten Schienen (1), mittig Führungsprofile (3)angeordnet sind,
- einen zweiteiligen Transportwagen (4) mit um einen Drehzapfen (5) schwenkbaren Rädern (6) mit horizontalen Führungsrollen (7), wobei der Abstand der Räder (6) mit dem Abstand der Schienen (1) für die Längs- und Querfahrt übereinstimmen und die Räder (6) mit den Führungsrollen (7) im Kreuzungspunkt (2) schwenkbar sind, und
- in Längs- und Querrichtung, am Transportwagen angeordnete Magnete (8), die mit Statoren (9) der Fahrbahn den Transportwagen (4) in Längs-und Querrichtung bewegen,
**dadurch gekennzeichnet, dass**
- die Räder (6) und die Führungsrollen (7) in einem zweiteiligen Radkasten (12) gelagert sind, wobei im äußeren Radkasten (13) das Drehlager (15) und die Führungsrollen (7) und im inneren Radkasten (14) die Räder (6) gelagert sind und die Verbindung zwischen dem inneren und dem äußeren Radkasten (14,15) über eine in Fahrtrichtung angeordnete tieferliegende Büchse/Bolzenlagerung (16) erfolgt, und
- einem Begrenzungselement (26) zum Sichern und Stoppen von Transportwagen und/oder Fahrzeugen, dessen Anschlaghebel (40) gegen das zu sichernde und zu stoppende Fahrzeug wirkt und in Fahrtrichtung abklappt.

2. Schienengeführtes Transportsystem nach Anspruch 1, **gekennzeichnet durch** ein umlaufendes mehrteiliges Gestänge(10) mit zwei gegenläufigen Schiebewagen (11) zum gleichzeitigen Drehen aller Räder (6) und horizontalen Führungsrollen (7).

3. Schienengeführtes Transportsystem nach den Ansprüchen 1 und 2, **gekennzeichnet durch** Bolzen (18), die beim Schwenken der Räder (6) des Transportwagens (4) in ein Fixierteil (21) der Fahrbahn eingreifen.

4. Schienengeführtes Transportsystem nach den Ansprüchen 1 bis 3, **dadurch gekennzeichnet, daß** die Räder (6) des Transportwagens (4) als Doppelräder ausgebildet sind.

5. Schienengeführtes Transportsystem nach den Ansprüchen 1 bis 4, **dadurch gekennzeichnet, daß** parallel zur Fahrbahn zwei Statoren (9) für die Gestängebewegung mit den Schiebewagen (11) angeordnet sind.

6. Schienengeführtes Transportsystem nach den Ansprüchen 1 bis 5 **dadurch gekennzeichnet, daß** während des Schwenkvorganges der Räder (6) im Kreuzungspunkt (2) über einem am Transportwagen (4) angebauten Gehäuse (17) mit einem federbelasteten Bolzen (18) und einem am Schiebewagen angebauten Schaltlineal (19) der Transportwagen (4) in einem Fixierpunkt (20) arretiert wird.

7. Schienengeführtes Transportsystem nach den Ansprüchen 1 bis 6, **dadurch gekennzeichnet, daß** der Transportwagen (4) aus einem Ober- und Unterwagen (4a, 4b) besteht, zwischen denen Dämpfungselemente (22) zur Reduzierung des Aufsetzstoßes angeordnet sind und die mit Sicherheitsbügeln (23) gegen das unbeabsichtigte Auseinanderfahren angeordnet sind.

8. Schienengeführtes Transportsystem nach den Ansprüchen 1 bis 7, **dadurch gekennzeichnet, daß** die Schienen (1) auf Schwellen (25) verlegt sind.

9. Schienengeführtes Transportsystem nach den Ansprüchen 1 bis 8, **dadurch gekennzeichnet, daß** um drei Doppelräderpaar (6) jeweils vier horizontale Führungsrollen (7) am Radkasten (12) angeordnet sind.

10. Schienengeführtes Transportsystem nach den Ansprüchen 1 bis 9, **dadurch gekennzeichnet, daß** flächendeckend zwischen den Fahrbahnen Sensoren (27) zur Steuerung der Statoren (9, 9a, 9b) und zur Wegmessung angeordnet sind.

11. Schienengeführtes Transportsystem nach den Ansprüchen 1 bis 10, **dadurch gekennzeichnet, daß** die Sensoren (27) so angeordnet sind, daß sich immer ein Sensor (27) unter dem Transportwagen (4) befindet.

12. Schienengeführtes Transportsystem nach den Ansprüchen 1 bis 11, **dadurch gekennzeichnet, daß** der Transportwagen (4) gegen seitliches Verschieben mittels Magnetfeldes zwischen dem ferritischen Unterbau (36) und dem Unterwagen (4b) gehalten wird.

13. Schienengeführten Transportsystem nach den Ansprüchen 1 bis 12, **gekennzeichnet durch** ein Begrenzungselement (26) mit
- einem doppelt abgewinkelten Anschlaghebel (40), der mit einem Gelenkbolzen (41) schwenkbar an einem Lagerbock (37) angeordnet ist,
- wobei die Fläche (55) des Anschlaghebels (40) gegen das zu sichernde und zu stoppende Fahrzeug wirkt und die Unterseite des Anschlaghebels (40) gegen einen abklappbaren Stützhebel (43) wirkt,
- einem Betätigungselement (44) gegen einen Schwenkhebel (46), der mit dem Anschlaghebel (40) auf dem gleichen Gelenkbolzen (41) schwenkbar montiert ist, wobei
- zwischen dem Schwenkhebel (46) und dem Stützhebel (43) eine Verbindungslasche (47) so angeordnet ist, daß sie die Bewegung des Betätigungselementes (44) zuerst auf den Stützhebel (43) und dann über den Begrenzungsteil (49) auf den Anschlaghebel (40) überträgt.

14. Vorrichtung nach Anspruch 13, **dadurch gekennzeichnet, daß** Anschläge (38, 39) die Bewegung des Anschlaghebels (40) und des Stützhebels (43) begrenzt.

15. Vorrichtung nach den Ansprüchen 13 und 14, **dadurch gekennzeichnet, daß** als Betätigungselement (44) ein Elektromagnet angeordnet ist.

16. Vorrichtung nach dem Anspruch 13, **dadurch gekennzeichnet, daß** das Betätigungselement (44) schwenkbar an einem Lagerbock (54) angeordnet ist, die Anschläge (38,39) und die Lagerböcke (37,54) auf einer Grundplatte (53) angeordnet sind.

17. Vorrichtung nach den Ansprüchen 13 bis 16, **dadurch gekennzeichnet, daß** am Gelenkbolzen (41) eine Feder (42) angeordnet ist und am Stützhebel (43) eine Feder (42) angeordnet ist.

## Claims

1. A railbound transport system for containers and swap bodies that is driven by a linear motor, consisting of
- a system of four rails (1) that are arranged at an angle and parallel to each other with a continuous planar travel surface, said rails forming intersection points (2), guiding profiles (3) being disposed in the center, on one rail (1) of said parallely disposed rails (1), outside said intersection points (2),
- a two-part transport cart (4) with wheels (6) with horizontal guide rolls (7) that are pivotal about a pivot (5), the spacing between the wheels (6) coinciding with the spacing of the rails (1) for the longitudinal and transverse travel and said wheels (6) with said guide wheels (7) being pivotal in said intersection point (2), and
- magnets (8) that are disposed in the longitudinal and transverse direction on said transport cart and that cause the transport cart (4) to move in the longitudinal and transverse direction together with stators (9) on the trackway,
**characterized in that**
- said wheels (6) and said guide rolls (7) are carried in a two-part wheel guard (12), the pivot bearing (15) and said guide rolls (7) being carried in the outer wheel guard (13) and said wheels (6) being carried in the inner wheel guard (14) and the connection between said inner and said outer wheel guard (14, 15) being achieved through a deeper lying sleeve/pin suspension (16) disposed in the direction of travel, and
- a limit element (26) for securing and stopping transport cart and/or vehicles the abutment lever (40) of which acts against the vehicle to be secured and stopped and folds down in the direction of travel.

2. The railbound transport system as set forth in claim 1, **characterized by** a multiple-piece perimeter rod linkage (10) with two push carriages (11) running in opposite directions for simultaneously rotating all the wheels (6) and horizontal guide rolls (7).

3. The railbound transport system as set forth in claims 1 and 2, **characterized by** bolts (18) that engage into a fixing part (21) of the trackway when the wheels (6) of the transport cart (4) are pivoting.

4. The railbound transport system as set forth in any one of the claims 1 through 3, **characterized in that** the wheels (6) of the transport cart (4) are configured to be double wheels.

5. The railbound transport system as set forth in any one of the claims 1 through 4, **characterized in that** two stators (9) for the rod linkage movement with the push carriages (11) are disposed parallel to the trackway.

6. The railbound transport system as set forth in any one of the claims 1 through 5, **characterized in that**, while the wheels (6) are pivoting in the intersection point (2), the transport cart (4) is locked in a fixing point (20) through a housing (17) mounted on said transport cart (4), using a spring-loaded bolt (18) and a switch actuating rod (19) mounted on said push carriage.

7. The railbound transport system as set forth in any one of the claims 1 through 6, **characterized in that** the transport cart (4) consists of a superstructure and an undercarriage (4a, 4b) between which there are interposed shock absorbers (22) for reducing the impact and which are disposed with securement bars (23) for securing them against accidentally coming apart.

8. The railbound transport system as set forth in any one of the claims 1 through 7, **characterized in that** the rails (1) are laid on sleepers (25).

9. The railbound transport system as set forth in any one of the claims 1 through 8, **characterized in that** four horizontal guide rolls (7) are disposed on the wheel guard (12), about a respective one of the three pairs of double wheels (6).

10. The railbound transport system as set forth in any one of the claims 1 through 9, **characterized in that** sensors (27) for controlling the stators (9, 9a, 9b) and for measuring the path are interposed between the trackways so as to cover the entire surface.

11. The railbound transport system as set forth in any one of the claims 1 through 10, **characterized in that** the sensors (27) are disposed so that one sensor (27) is always located underneath the transport cart (4).

12. The railbound transport system as set forth in any one of the claims 1 through 11, **characterized in that** the transport cart (4) is retained against lateral displacement by means of a magnetic field between the ferritic understructure (36) and the undercarriage (4b).

13. The railbound transport system as set forth in any one of the claims 1 through 12, **characterized by** a limit element (26)
- with a double bend abutment lever (40) that is pivotally disposed on a bearing block (37) by means of a pivot shaft (41),
- the surface (55) of said abutment lever (40) acting against the vehicle to be secured and stopped and the underside of said abutment lever (40) acting against a supporting fold down lever (43),
- with an actuator element (44) acting against a pivot lever (46) that is pivotally mounted on the same pivot shaft (41) as said abutment lever (40),
- a connecting strap (47) being interposed between said pivot lever (46) and said supporting lever (43) so as to transmit the movement of the actuator element (44) first onto said supporting lever (43) and then, through the limit piece (49), onto said abutment lever (40).

14. The apparatus as set forth in claim 13, **characterized in that** limit stops (38, 39) limit the movement of the abutment lever (40) and of the supporting lever (43).

15. The apparatus as set forth in the claims 13 and 14, **characterized in that** an electromagnet is disposed as the actuator element (44).

16. The apparatus as set forth in claim 13, **characterized in that** the actuator element (44) is pivotally disposed on a bearing block (54) and that the limit stops (38, 39) and the bearing blocks (37, 54) are disposed on a base plate (53).

17. The apparatus as set forth in the claims 13 through 16, **characterized in that** a spring (42) is disposed on the pivot shaft (41) and a spring (42) is disposed on the supporting lever (43).

## Revendications

1. Système de transport sur rails pour conteneurs et caisses mobiles intermodales fonctionnant avec un moteur linéaire, du type constitué
- d'un système de quatre rails (1) disposés parallèlement entre eux et de manière à former un angle et avec une surface de roulement plane continue, ces rails formant des points d'intersection (2), des profilés de guidage (3) étant disposés au centre sur un rail (1) parmi les rails (1) parallèles, en dehors des points d'intersection (2),
- d'un chariot de transport (4) avec des roues (6) avec des galets de guidage (7) horizontaux mobiles en pivotement autour d'un pivot (5), l'écart entre les roues (6) coïncidant à l'écart entre les rails (1) pour le roulement longitudinal et transversal et les roues (6) avec les galets de guidage (7) étant mobiles en pivotement au point d'intersection (2), et
- d'aimants (8) disposés sur le chariot de transport dans le sens de la longueur et en travers, ces aimants faisant se déplacer le chariot de transport (4) dans le sens de la longueur et en travers avec des stators (9) prévus sur la piste de roulement,
**caractérisé en ce que**
- les roues (6) et les galets de guidage (7) sont montés dans un passage de roue en deux parties (12), le coussinet de pivotement (15) et les galets de guidage (7) étant montés dans le passage de roue extérieur (13) et les roues (6) étant montées dans le passage de roue intérieur (14) et la liaison entre le passage de roue intérieur et le passage de roue extérieur (14, 15) étant réalisée par l'intermédiaire d'un montage sur bague/coussinet (16) disposé dans le sens de roulement et situé plus bas, et
- un élément de limitation (26) destiné à fixer et arrêter des chariots de transport et/ou des véhicules dont le levier de butée (40) agit contre le véhicule qu'il y a lieu de fixer et d'arrêter et se rabat dans le sens du roulement.

2. Système de transport sur rails selon la revendication 1, **caractérisé par** une tringlerie (10) périphérique constituée de plusieurs pièces avec deux chariots pousseurs (11) roulant dans des sens opposés et destinée à faire tourner simultanément toutes les roues (6) et les galets de guidage horizontaux (7).

3. Système de transport sur rails selon les revendications 1 et 2, **caractérisé par** des axes (18) qui s'engagent dans une pièce de fixation (21) de la piste de roulement lors du pivotement des roues (6) du chariot de transport (4).

4. Système de transport sur rails selon les revendications 1 à 3, **caractérisé en ce que** les roues (6) du chariot de transport (4) sont conformées en forme de roues doubles.

5. Système de transport sur rails selon les revendications 1 à 4, **caractérisé en ce que** deux stators (9) sont disposés parallèlement à la piste de roulement pour le mouvement de la tringlerie avec les chariots pousseurs (11).

6. Système de transport sur rails selon les revendications 1 à 5, **caractérisé en ce que**, pendant le pivotement des roues (6) au point d'intersection (2), le chariot de transport (4) est arrêté en un point de fixation (20) par l'intermédiaire d'un boîtier (17) rapporté sur le chariot de transport (4) avec un axe (18) sollicité par un ressort et une tringle de commutation (19) rapportée sur le chariot pousseur.

7. Système de transport sur rails selon les revendications 1 à 6, **caractérisé en ce que** le chariot de transport (4) est constitué d'une superstructure et d'un châssis de roulement (4a, 4b) entre lesquels sont disposés des éléments amortisseurs (22) destinés à réduire l'impact et qui sont disposés avec des barres de sécurité (23) les empêchant de s'écarter intempestivement.

8. Système de transport sur rails selon les revendications 1 à 7, **caractérisé en ce que** les rails (1) sont posés sur des traverses (25).

9. Système de transport sur rails selon les revendications 1 à 8, **caractérisé en ce que** quatre galets de guidage horizontaux (7) sont disposés sur le passage de roue (12), autour de chacune des trois paires de roues doubles (6).

10. Système de transport sur rails selon les revendications 1 à 9, **caractérisé en ce que** des capteurs (27) destinés à commander les stators (9, 9a, 9b) et à mesurer le trajet parcouru sont disposés sur toute la surface entre les pistes de roulement.

11. Système de transport sur rails selon les revendications 1 à 10, **caractérisé en ce que** les capteurs (27) sont disposés de telle sorte qu'il se trouve toujours un capteur (27) en dessous du chariot de transport (4).

12. Système de transport sur rails selon les revendications 1 à 11, **caractérisé en ce que** le chariot de transport (4) est retenu pour empêcher son déplacement latéral au moyen d'un champ magnétique entre l'infrastructure (36) ferritique et le châssis de roulement (4b).

13. Système de transport sur rails selon les revendications 1 à 12, **caractérisé par** un élément limiteur (26)
- avec un levier de butée (40) doublement coudé qui est monté pivotant sur un support de palier (37) avec un tourillon (41),
- la surface (55) du levier de butée (40) agissant contre le véhicule qu'il y a lieu de fixer et d'arrêter et la face inférieure du levier de butée (40) agissant contre un levier support (43) rabattable,
- avec un élément d'actionnement (44) agissant contre un levier pivotant (46) qui est monté pivotant sur le même tourillon (41) que le levier de butée (40),
- une patte de liaison (47) étant interposée entre le levier pivotant (46) et le levier support (43) de manière à transmettre le mouvement de l'élément d'actionnement (44) d'abord sur le levier support (43) et ensuite, par l'intermédiaire de la pièce de limitation (49), sur le levier de butée (40).

14. Dispositif selon la revendication 13, **caractérisé en ce que** des butées (38, 39) limitent le mouvement du levier de butée (40) et du levier support (43).

15. Dispositif selon la revendication 13 et 14, **caractérisé en ce qu'**en tant qu'élément d'actionnement (44) est disposé un électroaimant.

16. Dispositif selon la revendication 13, **caractérisé en ce que** l'élément d'actionnement (44) est disposé mobile en pivotement sur un support de palier (54) et que les butées (38, 39) et les supports de palier (37, 54) sont disposés sur une plaque de base (53).

17. Dispositif selon les revendications 13 à 16, **caractérisé en ce qu'**un ressort (42) est disposé sur le tourillon (41) et qu'un ressort (42) est disposé sur le levier support (43).
